# EUROPEAN PATENT APPLICATION

(11) **EP 3 757 758 A1**
(43) Date of publication of application: **30.12.2020**
(21) Application number: 20164429.1
(22) Date of filing: 20.03.2020
(51) Int. Cl.: G06F 8/30, G06F 11/34, G06N 3/08

(54) **METHODS, SYSTEMS, ARTICLES OF MANUFACTURE AND APPARATUS TO SELECT CODE DATA STRUCTURE TYPES**

(30) Priority: 26.06.2019 US 201916453816
(71) Applicant: Intel Corporation, Santa Clara, CA 95054 (US)
(72) Inventor: GOTTSCHLICH, Justin, Santa Clara, CA 95054 (US); ALAM, Mohammad Mejbah Ul, Santa Clara, CA 95054 (US); ZHOU, Shengtian, Santa Clara, CA 95054 (US)
(74) Representative: Rummler, Felix

(57) **Abstract**

Methods, apparatus, systems and articles of manufacture are disclosed to select code data structure types. An example disclosed apparatus includes an application programming interface (API) engine to generate an abstract data structure (ADS) placeholder in a location of a code sample corresponding to a memory operation, and a data structure selector to select a first candidate data structure having a first candidate data structure type, the first candidate data structure to service the memory operation of the ADS placeholder. The example apparatus also includes a workload engine to select a first candidate workload type to be processed by the selected first candidate data structure, and an execution logger to log first code performance metrics during execution of the code sample during a first iteration corresponding to the first candidate data structure type and the first candidate workload type, and log second code performance metrics during execution of the code sample during a second duration corresponding to a second candidate data structure type and the first candidate workload type. The example apparatus also includes a classification engine to select one of the first candidate data structure type or the second candidate data structure type based on a relative ranking of the first and second code performance metrics.

## Description

### FIELD OF THE DISCLOSURE

This disclosure relates generally to code development, and, more particularly, to methods, systems, articles of manufacture and apparatus to select code data structure types.

### BACKGROUND

Applications executing on a platform, such as a personal computer (PC), server, tablet, etc. utilize particular data structures to facilitate data transfer and/or data manipulation. In some examples, a first data structure type is implemented by a calendar application in which the first data structure type is able to facilitate a particular volume and/or syntax is data. In some examples, a second data structure is implemented by a numerical analysis application in which the second data structure type is a sparse data matrix able to handle relatively large data input requirements.

### BRIEF DESCRIPTION OF THE DRAWINGS

FIG. 1 is a schematic illustration of an example data structure selection system to select code data structure types in a manner consistent with the teachings of this disclosure.
FIG. 2 is a schematic illustration of an example data structure determiner of FIG. 1 to select code data structure types.
FIGS. 3-5 are flowcharts representative of machine readable instructions which may be executed to implement the example data structure determiner of FIGS. 1 and 2.
FIG. 6 is a block diagram of an example processing platform structured to execute the instructions of FIGS. 3-5 to implement the example data structure determiner of FIGS. 1 and 2.

The figures are not to scale. In general, the same reference numbers will be used throughout the drawing(s) and accompanying written description to refer to the same or like parts.

Descriptors "first," "second," "third," etc. are used herein when identifying multiple elements or components which may be referred to separately. Unless otherwise specified or understood based on their context of use, such descriptors are not intended to impute any meaning of priority, physical order or arrangement in a list, or ordering in time but are merely used as labels for referring to multiple elements or components separately for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for ease of referencing multiple elements or components.

### DETAILED DESCRIPTION

Artificial intelligence (AI), including machine learning (ML), deep learning (DL), and/or other artificial machine-driven logic, enables machines (e.g., computers, logic circuits, etc.) to use a model to process input data to generate an output based on patterns and/or associations previously learned by the model via a training process. For instance, the model may be trained with data to recognize patterns and/or associations and follow such patterns and/or associations when processing input data such that other input(s) result in output(s) consistent with the recognized patterns and/or associations.

Many different types of machine learning models and/or machine learning architectures exist. In examples disclosed herein, a long short-term memory (LSTM) model is used. Using an LSTM model enables series-type data to be considered in a manner that allows temporal context revelations. In general, implementing a ML system involves two phases, a learning/training phase and an inference phase. In the learning/training phase, a training algorithm is used to train a model to operate in accordance with patterns and/or associations based on, for example, training data. In general, the model includes internal parameters that guide how input data is transformed into output data, such as through a series of nodes and connections within the model to transform input data into output data. Additionally, hyperparameters are used as part of the training process to control how the learning is performed (e.g., a learning rate, a number of layers to be used in the machine learning model, etc.). Hyperparameters are defined to be training parameters that are determined prior to initiating the training process.

Different types of training may be performed based on the type of ML/AI model and/or the expected output. For example, supervised training uses inputs and corresponding expected (e.g., labeled) outputs to select parameters (e.g., by iterating over combinations of select parameters) for the ML/AI model that reduce model error. As used herein, labelling refers to an expected output of the machine learning model (e.g., a classification, an expected output value, etc.) Alternatively, unsupervised training (e.g., used in deep learning, a subset of machine learning, etc.) involves inferring patterns from inputs to select parameters for the ML/AI model (e.g., without the benefit of expected (e.g., labeled) outputs).

Once training is complete, a model is deployed for use as an executable construct that processes an input and provides an output based on the network of nodes and connections defined in the model. The model is stored at one or more memory locations or, in some examples, in one or more network-accessible location(s) (e.g., cloud-based storage). The model may then be executed by the local agent.

The deployed model may operate in an inference phase to process data. In the inference phase, data to be analyzed (e.g., live data) is input to the model, and the model executes to create an output. This inference phase can be thought of as the AI "thinking" to generate the output based on what it learned from the training (e.g., by executing the model to apply the learned patterns and/or associations to the live data). In some examples, input data undergoes pre-processing before being used as an input to the machine learning model. Moreover, in some examples, the output data may undergo post-processing after it is generated by the AI model to transform the output into a useful result (e.g., a display of data, an instruction to be executed by a machine, etc.).

In some examples, output of the deployed model may be captured and provided as feedback. By analyzing the feedback, an accuracy of the deployed model can be determined. If the feedback indicates that the accuracy of the deployed model is less than a threshold or other criterion, training of an updated model can be triggered using the feedback and an updated training data set, hyperparameters, etc., to generate an updated, deployed model.

Utilizing and/or otherwise selecting a particular data structure affects a performance metric of an application executing on a platform. Performance metrics include, but are not limited to, an amount of memory consumed by the data structure, or a speed at which the data structure is capable of transferring (e.g., reading, writing) and/or modifying data, a number of computer processing unit (CPU) cycles consumed by particular memory operation(s), etc. For instance, performance metrics associated with an amount of memory being consumed by the application become important for circumstances in which the application operates on a mobile device platform that has a finite amount of memory. On the other hand, performance metrics associated with a speed at which data can be transferred becomes important for circumstances in which the application processes relatively large quantities of data in real-time. In still other examples, an ordered list data structure type enables dataset retrieval to occur in a relatively fast manner, but that data structure type exhibits substantially slower element storage capabilities.

The particular data structures are typically selected by a code developer during a code development process of the application. As such, the code developer requires detailed knowledge of a relatively large number of different data structure types, a detailed knowledge of syntax implementation of the different data structure types, and a detailed knowledge of which data structure types best improve the performance metrics of interest. Additionally, in the event an application uses a particular type of data and/or different data types throughout its operation, such evolving inputs and/or evolving heterogeneous systems are too numerous for the code development personnel to consider effectively. For instance, an ordered list data type (e.g., data container) allows relatively fast retrieval of a dataset, but that same data container type exhibits a relatively slow ability for inserting new elements. In another example, a hash table data type facilitates relatively fast insertion and/or retrieval of particular dataset items, but tasks related to listing an entire dataset in a particular order (e.g., numeric order, alphabetic order, etc.) occurs relatively slowly. Still further, in the event a first data structure type is selected at a first time and is observed to exhibit relatively good performance characteristics in connection with a first type of input data, in the event the input data types and/or input data quantities change throughout the use of the coded application, performance characteristics may adversely change (e.g., degrade). Because data structure selection is a laborious process requiring substantial expertise, numerous design factors, and/or possible dynamic operating conditions, applications written and/or otherwise developed by code development personnel suffer from one or more performance metrics when particular data structures are selected. In other words, relying on the discretion of the code development personnel may result in sub-standard application performance.

Appropriate selection of data structures allows one or more performance metrics of an application to improve. Examples disclosed herein enable selection of data structure types during code development in a manner that avoids discretionary choices by code developers, and considers an effect on one or more performance metrics. Additionally, examples disclosed herein enable such data structure type selection(s) without *a priori* knowledge of data type(s) to be implemented with the data structure(s) of the application. Stated differently, during a first time period of application execution a first type of data might be processed with a first demand (e.g., a quantity of data processed per unit of time). However, as the application matures (e.g., becomes more popular, attracts more users), corresponding data input types and/or demands may change during a second time period of application execution. As such, while the initially selected data container type may have been suitable and/or otherwise appropriate during the first time period, that same data container type may not have the ability to handle different types of input data and/or different quantities of input data during the second time period. Examples disclosed herein evaluate the many different combinations of data container types in connection with heterogeneous systems and evolving application usage, while removing the discretionary errors (e.g., code developer assumptions of the best data container type to use) of the code developer such that inexperienced and/or erroneous selection of data structure types can be prevented.

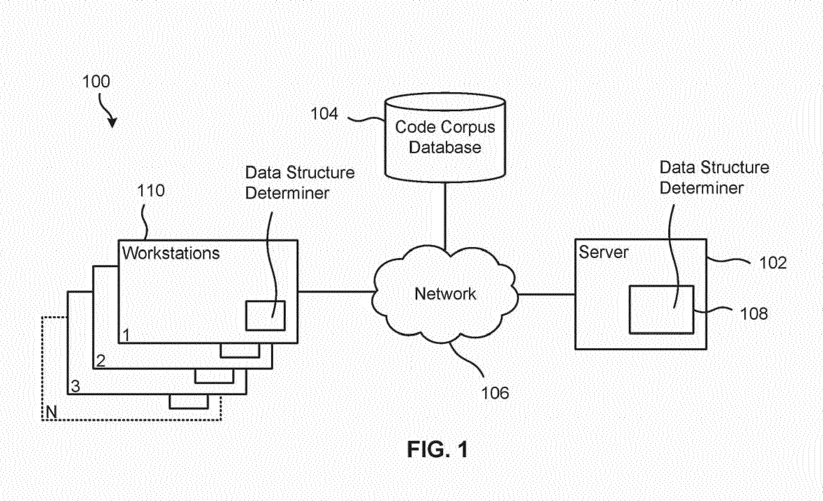

FIG. 1 is a schematic illustration of an example data structure selection system 100. In the illustrated example of FIG. 1, the data structure selection system 100 includes an example server 102 communicatively connected to an example code corpus database 104 via an example network 106. The example server 102 includes an example data structure determiner 108 to facilitate selection of code data structure types, as described in further detail below. The example data structure determiner 108 is communicatively connected to any number of example workstations 110 via the example network 106. In some examples, respective workstations 110 communicatively connect to the example data structure determiner 108 during code drafting activities of a user (e.g., a software developer), in which the example data structure determiner 108 renders a graphical user interface (GUI) and/or terminal screen for data input/output. However, in some examples the data structure determiner 108 may be located within each respective workstation 110 in a self-contained manner. Additionally, while the illustrated example of FIG. 1 illustrates the example code corpus database 104 as a separate entity communicatively connected via the example network 106, in some examples the code corpus database 104 resides within the example server 102 or resides within each respective workstation 110 (e.g., in the example data structure determiner 108 of each respective workstation 110).

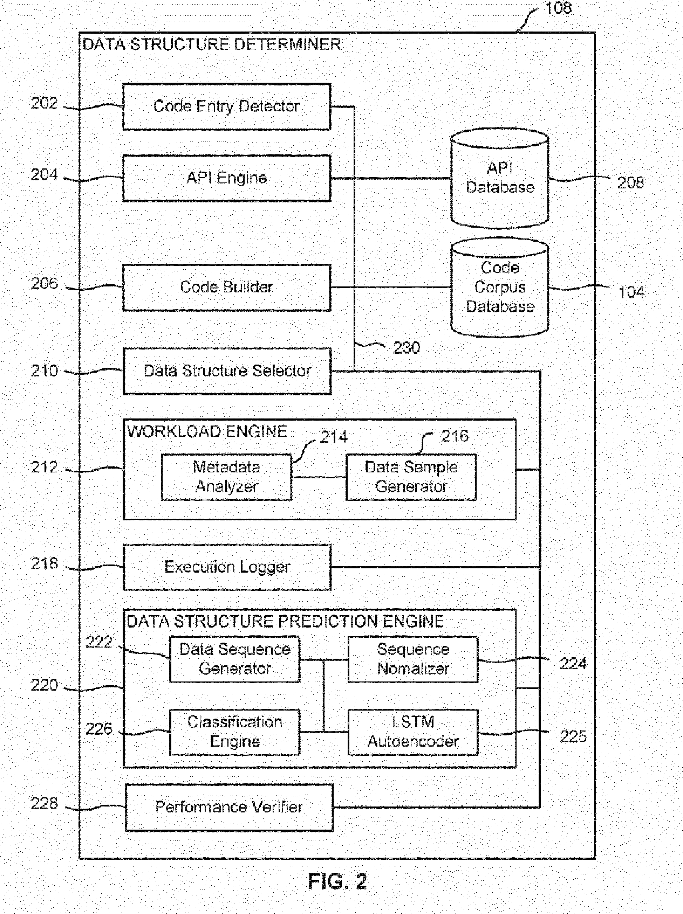

FIG. 2 illustrates additional detail corresponding to the example data structure determiner 108 of FIG. 1. In the illustrated example of FIG. 2, the data structure determiner 108 includes an example code entry detector 202, an example application programming interface (API) engine 204, an example code builder 206, an example API database 208, the example code corpus database 104, an example data structure selector 210, and an example workload engine 212. The example workload engine 212 includes an example metadata analyzer 214 and an example data sample generator 216. The example data structure determiner 108 of FIG. 2 also includes an example execution logger 218 and an example data structure prediction engine 220. The example data structure prediction engine 220 of FIG. 2 also includes an example data sequence generator 222, an example sequence normalizer 224, an example long short-term memory (LSTM) autoencoder 225, and an example classification engine 226. The example data structure determiner 108 of FIG. 2 also includes an example performance verifier 228, and the aforementioned structure may be communicatively connected therebetween via an example bus 230.

In operation, the example code entry detector 202 monitors for interaction and/or invocation of the data structure selection system 100 of FIG. 1. In some examples, the code entry detector 202 detects entry of code and/or pseudo code (referred to herein as "code of interest") in a code editor or code editing environment. In some examples, the code entry detector 202 facilitates a GUI or editing environment that permits user entry (e.g., via a keyboard) of code and/or pseudo code. In still other examples, a third-party code editor (e.g., Notepad++®, Sublime Text®, Atom®, Coda®, TextMate®, jEdit®, Visual Studio Code®, etc.) is invoked by the user and the example code entry detector 202 monitors instances of data entry (e.g., insertion of code of interest) or other interaction with the third-party code editor.

In response to the example code entry detector 202 determining interaction with (or invocation of) the example data structure selection system 100, the example API engine 204 presents available APIs based on entered code or pseudo-code (e.g., code of interest). In particular, the example API engine 204 queries the example API database 208 with text that has been detected by the code entry detector 202. Such text may correspond to any type of memory operation in which data is being read, written and/or manipulated, such as text corresponding to pseudo-code to insert a numeric value into an address list, text corresponding to pseudo-code to read an element from a database, text corresponding to pseudo-code to modify a large numeric value in the database, etc.

In some examples, available APIs (sometimes referred to herein as "API calls") in the API database 208 include data memory management instructions, firmware and/or candidate data structure type(s) that corresponds to a particular type of memory operation. For example, an "insert" API includes data memory management instructions for one or more processors of a platform to insert an element to a container at a specified location. In other examples, a "push_back" API includes data memory management instructions for one or more processors of a platform to add an element at the end of a container. In some examples, the code of interest includes information (e.g., metadata) corresponding to a type of application in which the memory operation(s) will occur. In some examples, the API database 208 may not include detailed data memory management instructions, firmware, candidate code container type(s) and/or application type for a particular memory operation. In such circumstances a default API is selected to serve as a wrapper of a particular portion of the code of interest (e.g., code or pseudo-code). Generally speaking, selected APIs and/or APIs that are placed in the code of interest serve as markers or analysis points. The APIs refer to an abstract data structure (ADS), which is an agnostic data structure or placeholder for a yet-to-be-determined data structure type. As used herein, APIs, API calls and ADSs may be used interchangeably. As described in further detail below, example metadata related to candidate data structure types that might work well with the memory operation(s) can be used to identify particular data structure types to analyze in an effort to select the best (e.g., most efficient, least resource-hungry, etc.) data structure type for the code of interest.

The example API engine 204 inserts the API call (e.g., inserts an ADS placeholder) into the code of interest (e.g., pseudo-code written in an editor by a user, pseudo-code retrieved by the code entry detector 202 from a memory storage that includes code of interest previously written by a user, a code sample corresponding to a memory operation, etc.), and retrieves available metadata associated with the ADS. Example metadata includes, but is not limited to, operation type information, operation length information (e.g., a number of operations, a number of strings, a number of words in a text file), etc. Generally speaking, the ADSs delimit and/or otherwise flag one or more portions of the code of interest to be analyzed for data container selection. The example ADSs (e.g., APIs, API calls) reference particular operations including, but not limited to, insert, delete, access and replace. The example code entry detector 202 determines whether the code of interest has been completely analyzed for API call insertion points (e.g., ADS wrappers to identify memory operations in need of a particular data structure type selection). If so, the example code builder 206 builds the code of interest using default data structure types for the one or more API call insertion points in the candidate code. In some examples, the example code builder 206 builds the code of interest with the default and/or API-specified data structure types to establish a performance baseline of the code of interest. In some examples, the API call includes a particular data structure type that comports with industry expectations, but examples disclosed herein enable an analysis of the candidate code in a manner that permits alternative data structure type selection that may exhibit improved platform performance during code execution. For instance, while industry recommendations (e.g., industry standards, industry best practices, and/or industry expectations) may identify a first data container type as working particularly well for a first type of application, such industry recommendations may not fully consider different types of input data that the application may experience. As such, merely relying on industry recommendations will still cause the code of interest to exhibit degraded performance metrics.

For a particular portion of the code of interest that is in need of a code data structure to be selected (e.g., a portion of the candidate code having an ADS), the example data structure selector 210 selects one candidate data structure type based on output from a prediction engine. In some examples, the candidate data structure type(s) may be selected and "tried" in a recursive manner to measure a corresponding effect. Additionally, now that a candidate data structure type has been selected (e.g., selected from a list of data types from the example API database 208), the example workload engine 212 selects a candidate workload (e.g., including a candidate workload type, such as a workload type associated with spreadsheet operations, a workload type associated with image processing operations, etc.) to be applied to the candidate code in an effort to evaluate one or more code performance metrics. Stated differently, a number of factors beyond just a code data structure type selection may have an effect on the candidate code, such as the type of data inputs being processed (e.g., integer input data versus floating point input data, text data, etc). As the number of different factors increases, so too does the number of possible permutations of those factors, each of which can have a particular effect on performance metrics of the code of interest. The numerosity of such permutations is typically beyond the capability of the code developer, who has a finite amount of time and resources to identify the best code data structure type. Examples disclosed herein allow such permutations to be implemented to find corresponding effects.

The example metadata analyzer 214 searches and retrieves available metadata from the candidate source code and determines if the example code corpus database 104 includes a match for the available metadata. For example, the code corpus database 104 includes industry standard code to facilitate memory management operations. Some of the example code within the code corpus database 104 has been thoroughly evaluated to identify particular code (e.g., particular function calls having particular code data structure types) that exhibits relatively improved performance for particular types of memory applications. In some examples, memory applications relate to address storage in a database application. Such database applications may have a relatively low frequency or access demand pattern per unit of time as compared to other applications relating to, for example, real-time drone navigation activities. As such, the example metadata analyzer 214 detects particular metadata from the code of interest that can determine a type of application the candidate code is intended to facilitate. In some examples, the metadata analyzer 214 parses the code of interest for keywords that have been stored in the example API database 208.

When a particular application is determined based on the analysis performed by the example metadata analyzer 214 of available metadata, the example data sample generator 216 retrieves and arranges source data samples to be used for execution with the recently-selected data structure type. Generally speaking, examples disclosed herein apply one or more different types and/or quantities of input data samples to characterize an effect on the code of interest. In some examples, the input data samples serve as a "stress test" of the code of interest. In still further examples, in the event the application is deemed to be an address manager, then the code corpus information in the example code corpus database 104 may indicate that alphanumeric text strings should be used as the source data samples to test the selected code data structure type. However, in the event the example code corpus database 104 does not find a matching application type based on available metadata in the candidate source code (e.g., the candidate source code does not contain any metadata), then the example data sample generator 216 selects and/or otherwise applies a random data sample type (e.g., a float data type with sample float data values).

After (a) a candidate data structure is selected and (b) a candidate workload (and/or a candidate volume (e.g., quantity) of workload data) is selected, the example code builder 206 builds the code of interest and the example execution logger 218 initiates execution of the code of interest. Additionally, the example execution logger 218 logs one or more code performance metrics during the code execution process and saves such information to a data store (e.g., a database, such as the example code corpus database 104) for later analysis, as described in further detail below. The example logged execution data is stored by the execution logger 218 as data structure usage behavior and/or sequences of operations performed on the selected data structure during the execution of the code of interest. In some examples, the usage behavior is stored as data tuples that identify (1) a type of operation (e.g., a memory access operation, a data insertion operation, a data delete operation, a data update operation, etc.) and (2) a length of data accessed during the aforementioned operation.

Upon completion of the code execution, the example workload engine 212 determines whether the currently selected code data structure should be provided with an alternate workload configuration (e.g., an alternate data type, an alternate volume/quantity of sample data, etc.). If so, then the workload engine repeats the aforementioned process of checking the code corpus (e.g., in the example code corpus database 104) for sample input data to test, stress and/or otherwise evaluate how the selected code data structure type handles the sample data in the code of interest. Any number of iterations may occur, in which each iteration results in a log of the behavior of the code of interest with the selected code data structure type and different sample input data types and/or quantities/volumes (usage behavior).

On the other hand, in the event the example workload engine 212 does not select additional/alternate workload configurations (e.g., all known data types have been tested and logged), then the example data structure selector 210 determines whether to select an alternate code data structure type. If so, then the aforementioned process repeats and additional log code behavior instances are saved for later evaluation with the alternate code data structure type. After all desired (a) code data structure types and (b) associated sample input data/workload configurations/permutations have been tested and logged for each respective code data structure type, the example execution logger 218 provides the logged data to a machine learning model, such as the example data structure prediction engine 220. As described in further detail below, the example data structure prediction engine 220 predicts a data structure type to be used with the code of interest. In some examples, the performance verifier 228 performs one or more performance verification operations to make sure that the selected data structure type renders the code of interest in a fully functional manner, and also updates one or more APIs with information learned from benefits achieved with the newly selected data structure types.

As described above, the example data structure prediction engine 220 predicts a data structure type with one or more machine learning techniques. Examples disclosed herein employ a long short-term memory (LSTM) neural network, which is particularly helpful with making predictions with sequential data, but examples disclosed herein are not limited thereto. The example data sequence generator 222 generates a sequence of operational data (OP DATA) from the previously stored log data. In some examples, the stored log data is collected from high-performance source code executions in a manner analogous to ground-truth data. The OP DATA may be formatted by the data sequence generator 222 as ordered sets of tuples, where each tuple includes a type of an operation, a length of data accessed in the operation, etc. However, because each attempted permutation of code execution includes different combinations of code data structure types and respective input data types/quantities, the ordered sets of tuples illustrating the type(s) of operation(s) and length(s) of data accessed (manipulated) in the operation are of varying sizes. Such ordered sets of tuples operate as a type of fingerprint that corresponds to particular code data structure types and associated input data, in which such fingerprints are labeled by the example classification engine 226 in an effort to identify particular beneficial code execution behaviors. Accordingly, the example sequence normalizer 224 submits the OP DATA to an LSTM autoencoder 225 to determine a fixed-length representation of the sequence (the sequence of ordered sets of tuples).

The example classification engine 226 classifies the fixed length representation generated by the example LSTM autoencoder 225 using a neural network of the LSTM autoencoder 225, and ranks respective representations based on how they affect the performance metrics. In some examples a cost function is applied to determine a relative maximum benefit score for any number of performance parameters of interest (e.g., code execution speed, code memory fetch operations, stalls, etc.). The example classification engine 226 identifies a winning data structure from the different attempted permutations based on the ranked results (e.g., based on which representation (e.g., fingerprint) causes the relative highest cost value. In some examples, the classification engine 226 applies a feedforward neural network having a softmax layer (e.g., a normalized exponential function) as the output indicative of the recommended code data structure type to be used in the originally provided candidate code (e.g., the softmax layer produces a probability distribution with one of the respective code data structure types exhibiting a relative maximum value indicative of the best selection).

The example performance verifier 228 executes the candidate code having the recommended (e.g., "winning") data structure to compare performance to the previously established baseline execution analysis. In some examples, the performance verifier 228 invokes the code builder 206 to build the candidate code using the recommended data structure, and the example execution logger 218 logs and analyzes the performance of the updated candidate code. As described above, any number of performance metrics may be used to analyze the performance of the candidate code including, but not limited to, execution time, CPU usage, memory usage, stall/spin counts, etc. In the event of improved metrics during the comparison, labelled mappings of the selected data structure and the associated conditions are stored in the example API database 208 to improve future recommendations and/or establish model parameters.

While an example manner of implementing the example data structure determiner 108 of FIG. 2 is illustrated in FIGS. 1 and 2, one or more of the elements, processes and/or devices illustrated in FIGS. 1 and 2 may be combined, divided, re-arranged, omitted, eliminated and/or implemented in any other way. Further, the example code entry detector 202, the example API engine 204, the example code builder 206, the example API database 208, the example code corpus database 104, the example data structure selector 210, the example metadata analyzer 214, the example data sample generator 216, the example workload engine 212, the example execution logger 218, the example data structure prediction engine 220, the example data sequence generator 222, the example sequence normalizer 224, the example classification engine 226, the example LSTM autoencoder 225, the example performance verifier 228 and/or, more generally, the example data structure determiner 108 of FIGS. 1 and 2 may be implemented by hardware, software, firmware and/or any combination of hardware, software and/or firmware. Thus, for example, any of the example code entry detector 202, the example API engine 204, the example code builder 206, the example API database 208, the example code corpus database 104, the example data structure selector 210, the example metadata analyzer 214, the example data sample generator 216, the example workload engine 212, the example execution logger 218, the example data structure prediction engine 220, the example data sequence generator 222, the example sequence normalizer 224, the example classification engine 226, the example LSTM autoencoder 225, the example performance verifier 228 and/or, more generally, the example data structure determiner 108 of FIGS. 1 and 2 could be implemented by one or more analog or digital circuit(s), logic circuits, programmable processor(s), programmable controller(s), graphics processing unit(s) (GPU(s)), digital signal processor(s) (DSP(s)), application specific integrated circuit(s) (ASIC(s)), programmable logic device(s) (PLD(s)) and/or field programmable logic device(s) (FPLD(s)). When reading any of the apparatus or system claims of this patent to cover a purely software and/or firmware implementation, at least one of the example code entry detector 202, the example API engine 204, the example code builder 206, the example API database 208, the example code corpus database 104, the example data structure selector 210, the example metadata analyzer 214, the example data sample generator 216, the example workload engine 212, the example execution logger 218, the example data structure prediction engine 220, the example data sequence generator 222, the example sequence normalizer 224, the example classification engine 226, the example LSTM autoencoder 225, the example performance verifier 228 and/or, more generally, the example data structure determiner 108 of FIGS. 1 and 2 is/are hereby expressly defined to include a non-transitory computer readable storage device or storage disk such as a memory, a digital versatile disk (DVD), a compact disk (CD), a Blu-ray disk, etc. including the software and/or firmware. Further still, the example data structure determiner 108 of FIGS. 1 and 2 may include one or more elements, processes and/or devices in addition to, or instead of, those illustrated in FIGS. 1 and 2, and/or may include more than one of any or all of the illustrated elements, processes and devices. As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

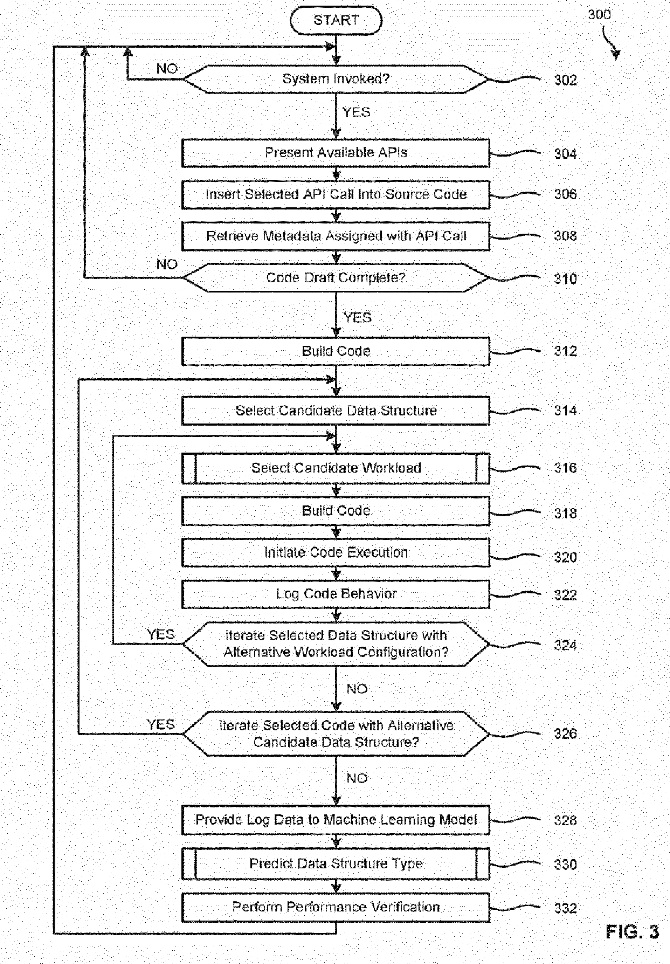

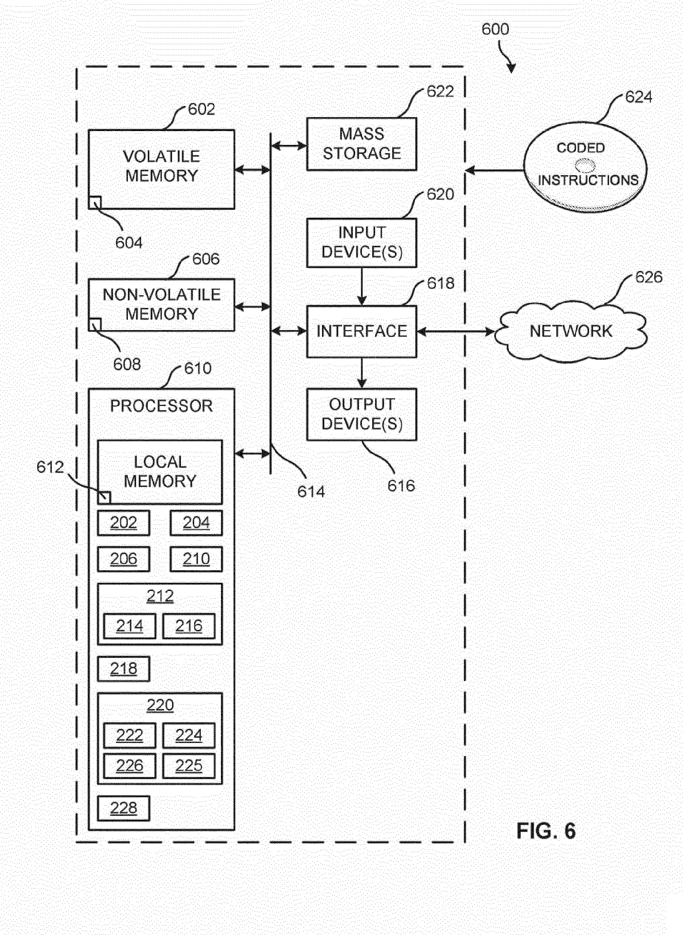

Flowcharts representative of example hardware logic, machine readable instructions, hardware implemented state machines, and/or any combination thereof for implementing the data structure determiner 108 of FIGS. 1 and 2 are shown in FIGS. 3-5. The machine readable (e.g., computer-readable) instructions may be one or more executable programs or portion(s) of an executable program for execution by a computer processor such as the processor 612 shown in the example processor platform 600 discussed below in connection with FIG. 6. The program may be embodied in software stored on a non-transitory computer readable storage medium such as a CD-ROM, a floppy disk, a hard drive, a DVD, a Blu-ray disk, or a memory associated with the processor 612, but the entire program and/or parts thereof could alternatively be executed by a device other than the processor 612 and/or embodied in firmware or dedicated hardware. Further, although the example program(s) is/are described with reference to the flowcharts illustrated in FIGS. 3-5, many other methods of implementing the example data structure determiner 108 may alternatively be used. For example, the order of execution of the blocks may be changed, and/or some of the blocks described may be changed, eliminated, or combined. Additionally or alternatively, any or all of the blocks may be implemented by one or more hardware circuits (e.g., discrete and/or integrated analog and/or digital circuitry, an FPGA, an ASIC, a comparator, an operational-amplifier (op-amp), a logic circuit, etc.) structured to perform the corresponding operation without executing software or firmware.

The machine readable instructions described herein may be stored in one or more of a compressed format, an encrypted format, a fragmented format, a compiled format, an executable format, a packaged format, etc. Machine readable instructions as described herein may be stored as data (e.g., portions of instructions, code, representations of code, etc.) that may be utilized to create, manufacture, and/or produce machine executable instructions. For example, the machine readable instructions may be fragmented and stored on one or more storage devices and/or computing devices (e.g., servers). The machine readable instructions may require one or more of installation, modification, adaptation, updating, combining, supplementing, configuring, decryption, decompression, unpacking, distribution, reassignment, compilation, etc. in order to make them directly readable, interpretable, and/or executable by a computing device and/or other machine. For example, the machine readable instructions may be stored in multiple parts, which are individually compressed, encrypted, and stored on separate computing devices, wherein the parts when decrypted, decompressed, and combined form a set of executable instructions that implement a program such as that described herein.

In another example, the machine readable instructions may be stored in a state in which they may be read by a computer, but require addition of a library (e.g., a dynamic link library (DLL)), a software development kit (SDK), an application programming interface (API), etc. in order to execute the instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, the disclosed machine readable instructions and/or corresponding program(s) are intended to encompass such machine readable instructions and/or program(s) regardless of the particular format or state of the machine readable instructions and/or program(s) when stored or otherwise at rest or in transit.

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example processes of FIGS. 3-5 may be implemented using executable instructions (e.g., computer and/or machine readable instructions) stored on a non-transitory computer and/or machine readable medium such as a hard disk drive, a flash memory, a read-only memory, a compact disk, a digital versatile disk, a cache, a random-access memory and/or any other storage device or storage disk in which information is stored for any duration (e.g., for extended time periods, permanently, for brief instances, for temporarily buffering, and/or for caching of the information). As used herein, the term non-transitory computer readable medium is expressly defined to include any type of computer readable storage device and/or storage disk and to exclude propagating signals and to exclude transmission media.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc. may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, and (7) A with B and with C. As used herein in the context of describing structures, components, items, objects and/or things, the phrase "at least one of A and B" is intended to refer to implementations including any of (1) at least one A, (2) at least one B, and (3) at least one A and at least one B. Similarly, as used herein in the context of describing structures, components, items, objects and/or things, the phrase "at least one of A or B" is intended to refer to implementations including any of (1) at least one A, (2) at least one B, and (3) at least one A and at least one B. As used herein in the context of describing the performance or execution of processes, instructions, actions, activities and/or steps, the phrase "at least one of A and B" is intended to refer to implementations including any of (1) at least one A, (2) at least one B, and (3) at least one A and at least one B. Similarly, as used herein in the context of describing the performance or execution of processes, instructions, actions, activities and/or steps, the phrase "at least one of A or B" is intended to refer to implementations including any of (1) at least one A, (2) at least one B, and (3) at least one A and at least one B.

As used herein, singular references (e.g., "a", "an", "first", "second", etc.) do not exclude a plurality. The term "a" or "an" entity, as used herein, refers to one or more of that entity. The terms "a" (or "an"), "one or more", and "at least one" can be used interchangeably herein. Furthermore, although individually listed, a plurality of means, elements or method actions may be implemented by, e.g., a single unit or processor. Additionally, although individual features may be included in different examples or claims, these may possibly be combined, and the inclusion in different examples or claims does not imply that a combination of features is not feasible and/or advantageous.

The program 300 of FIG. 3 includes block 302, in which the example code entry detector 202 monitors for interaction and/or invocation of the data structure selection system 100 of FIG. 1. As described above, interaction and/or invocation of the data structure selection system 100 may occur in response to a user typing code into a GUI, while in some examples previously written code may be opened (e.g., opened in an editor or GUI from a file) in the code editing environment. The example API engine 204 presents available APIs in response to detecting a memory operation in the entered code of interest (block 304). In response to a selection of one of the presented APIs, the example API engine 204 inserts the selected API into the code of interest to serve as an ADS. As described above, the ADS serves as a placeholder location in the code of interest corresponding to a memory operation that requires a particular selection of a data structure. The example API engine 204 retrieves metadata (if any) associated with the selected API (block 308), and the example code entry detector 202 determines if analysis, parsing and/or review of the code of interest is complete (block 310). If not, then control returns to block 302 to determine if one or more instances of invocation occur (e.g., one or more additional code entries of memory operations).

When the example code entry detector 202 determines that the code of interest is complete (e.g., the user is finished writing code or pseudo-code, the code of interest has been loaded from a file, etc.) (block 310), the example code builder 206 builds the code of interest using default data structure types in an effort to establish a code execution performance baseline (block 312). As described above, the default data structure types may not be optimized for the code of interest, even when such default data structure types are selected based on industry best-practices. Examples disclosed herein facilitate an improved manner of data structure type selection based on code execution performance results in view of different data structure type permutations.

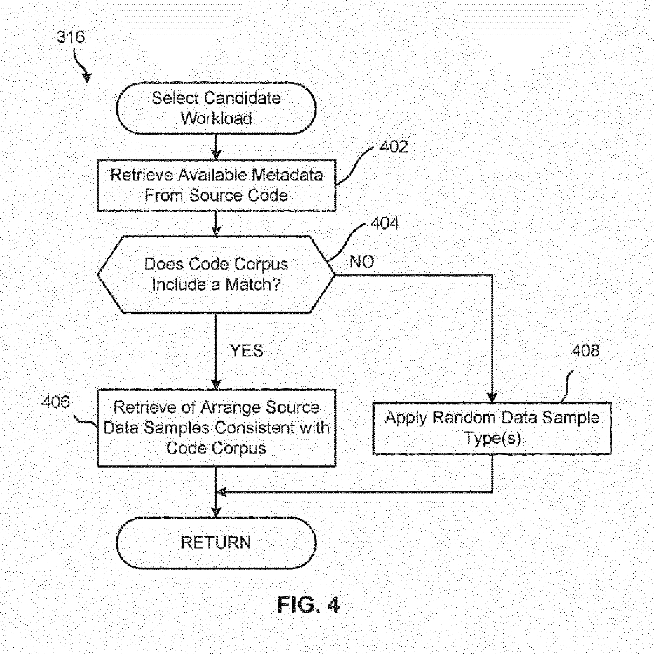

The example data structure selector 210 selects a candidate data structure type (block 314), and the example workload engine 212 selects a candidate workload to be used with the selected data structure type (block 316). FIG. 4 illustrates additional detail associated with selecting a candidate workload of block 316. In the illustrated example of FIG. 4, the example metadata analyzer 214 retrieves available metadata from the source code or pseudo-code (block 402). As described above, while industry best practices regarding data structure types may not always result in the optimum choice of a data structure type to be used in the code of interest, knowledge of an application type and/or purpose of the code of interest may be helpful when sampling and/or otherwise testing different data structure types that have a greater likelihood of being appropriate. With such information, the example metadata analyzer 214 queries the example code corpus database 104 to determine if there is a match of code having a similar application type or purpose as the code of interest (block 404). If so, then the example data sample generator 216 retrieves and/or otherwise arranges source data (e.g., input data to the selected data structure) of a particular type and/or quantity (volume) consistent with the code corpus examples (block 406). On the other hand, in the event the example metadata analyzer 214 does not identify a match in the example code corpus database 104 (block 404), then the example data sample generator 216 selects a random source data type (block 408) (e.g., floating point data type, integer data type, string data type, etc.) and a corresponding quantity (e.g., a floating point array of size 100, a quantity of ten-thousand integers, etc.). Control then returns to block 318 of FIG. 3.

Returning to the illustrated example of FIG. 3, the example code builder 206 builds the code of interest using the recently selected data container type, source data type and source data quantity (block 318). The example execution logger 218 initiates execution of the code of interest having the selected data container type, source data type and source data quantity (block 320) and logs the resulting performance metrics (usage behavior) (block 322). In some examples, the logged usage behavior is stored in the code corpus database 104, and in some examples the logged usage behavior is stored in an alternate storage location. The example workload engine 212 determines whether the selected data structure type should be tested with an alternate workload configuration (block 324), such as an alternate source data type (e.g., using integer data types instead of float data types) and/or an alternate source data quantity (e.g., using a greater or lesser number of source data elements (e.g., smaller or larger data arrays)). If so, control returns to block 316.

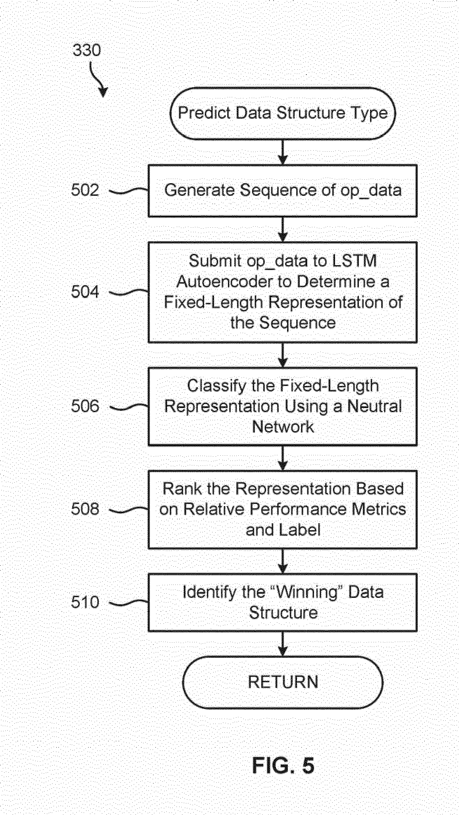

In the event the example workload engine 212 has completed testing any number of alternate workload configurations (block 324), the example data structure selector 210 determines whether a different data structure should be selected for additional testing (block 326). If so, control returns to block 314, otherwise the example execution logger 218 provides the logged data to a machine learning model (block 328). The example data structure prediction engine 220 predicts a data structure type based on analysis of the logged data (block 330). FIG. 5 illustrates additional detail associated with predicting the data structure type to be used in the code of interest (block 330). In the illustrated example of FIG. 5, the example data sequence generator 222 generates a sequence of operational data (OP_DATA) from the provided log data (block 502). As described above, the OP_DATA may be formatted as ordered sets of tuples that, for each permutation of data structure type and input data type, illustrate a particular fingerprint. Such code performance operating characteristics may exhibit certain fingerprints that are not readily ascertainable by human observers, and as a number of permutations grows, human observation is not a viable analysis method to determine which particular code data structure types work best for the code of interest.

The example sequence normalizer 224 submits the OP_DATA to an LSTM autoencoder 225 to determine a fixed-length representation of the sequences (fingerprints) (block 504), and the example classification engine 226 classifies the representations generated by the example LSTM autoencoder 225 using a neural network of the LSTM autoencoder 225 (block 506). The example classification engine 226 ranks the respective representations based on how they correspond to observed performance metrics during execution of the code of interest (block 508). As described above, a cost function may be applied to determine a relative maximum benefit cost score for two or more performance parameters of interest. Alternatively, in some examples the ranking is based on a single performance parameter of interest (e.g., a relatively lowest memory consumption metric, a relatively lowest CPU utilization metric, etc.). The example classification engine 226 identifies a winning data structure type from the ranked results (block 510) based on the ranking values. Control then returns to block 332 of FIG. 3. The example performance verifier 228 executes the candidate code having the winning data structure to compare performance to the previously established baseline execution analysis (block 332). In the event of an improvement over the baseline, the code of interest is deemed complete with the selected data structure that exhibits the best performance.

FIG. 6 is a block diagram of an example processor platform 600 structured to execute the instructions of FIGS. 3-5 to implement the data structure determiner 108 of FIGS. 1 and 2. The processor platform 600 can be, for example, a server, a personal computer, a workstation, a self-learning machine (e.g., a neural network), a mobile device (e.g., a cell phone, a smart phone, a tablet such as an iPad™), a personal digital assistant (PDA), an Internet appliance, a DVD player, a CD player, a digital video recorder, a Blu-ray player, a gaming console, a personal video recorder, a set top box, a headset or other wearable device, or any other type of computing device.

The processor platform 600 of the illustrated example includes a processor 612. The processor 612 of the illustrated example is hardware. For example, the processor 612 can be implemented by one or more integrated circuits, logic circuits, microprocessors, GPUs, DSPs, or controllers from any desired family or manufacturer. The hardware processor may be a semiconductor based (e.g., silicon based) device. In this example, the processor implements the example code entry detector 202, the example API engine 204, the example code builder 206, the example API database 208, the example code corpus database 104, the example data structure selector 210, the example metadata analyzer 214, the example data sample generator 216, the example workload engine 212, the example execution logger 218, the example data structure prediction engine 220, the example data sequence generator 222, the example sequence normalizer 224, the example classification engine 226, the example LSTM autoencoder 225, the example performance verifier 228 and/or, more generally, the example data structure determiner 108 of FIGS. 1 and 2.

The processor 612 of the illustrated example includes a local memory 613 (e.g., a cache). The processor 612 of the illustrated example is in communication with a main memory including a volatile memory 614 and a non-volatile memory 616 via a bus 618. The volatile memory 614 may be implemented by Synchronous Dynamic Random Access Memory (SDRAM), Dynamic Random Access Memory (DRAM), RAMBUS® Dynamic Random Access Memory (RDRAM®) and/or any other type of random access memory device. The non-volatile memory 616 may be implemented by flash memory and/or any other desired type of memory device. Access to the main memory 614, 616 is controlled by a memory controller.

The processor platform 600 of the illustrated example also includes an interface circuit 620. The interface circuit 620 may be implemented by any type of interface standard, such as an Ethernet interface, a universal serial bus (USB), a Bluetooth® interface, a near field communication (NFC) interface, and/or a PCI express interface.

In the illustrated example, one or more input devices 622 are connected to the interface circuit 620. The input device(s) 622 permit(s) a user to enter data and/or commands into the processor 612. The input device(s) can be implemented by, for example, an audio sensor, a microphone, a camera (still or video), a keyboard, a button, a mouse, a touchscreen, a track-pad, a trackball, isopoint and/or a voice recognition system.

One or more output devices 624 are also connected to the interface circuit 620 of the illustrated example. The output devices 624 can be implemented, for example, by display devices (e.g., a light emitting diode (LED), an organic light emitting diode (OLED), a liquid crystal display (LCD), a cathode ray tube display (CRT), an in-place switching (IPS) display, a touchscreen, etc.), a tactile output device, a printer and/or speaker. The interface circuit 620 of the illustrated example, thus, typically includes a graphics driver card, a graphics driver chip and/or a graphics driver processor.

The interface circuit 620 of the illustrated example also includes a communication device such as a transmitter, a receiver, a transceiver, a modem, a residential gateway, a wireless access point, and/or a network interface to facilitate exchange of data with external machines (e.g., computing devices of any kind) via a network 626. The communication can be via, for example, an Ethernet connection, a digital subscriber line (DSL) connection, a telephone line connection, a coaxial cable system, a satellite system, a line-of-site wireless system, a cellular telephone system, etc.

The processor platform 600 of the illustrated example also includes one or more mass storage devices 628 for storing software and/or data. Examples of such mass storage devices 628 include floppy disk drives, hard drive disks, compact disk drives, Blu-ray disk drives, redundant array of independent disks (RAID) systems, and digital versatile disk (DVD) drives.

The machine executable instructions 632 of FIGS. 3-5 may be stored in the mass storage device 628, in the volatile memory 614, in the non-volatile memory 616, and/or on a removable non-transitory computer readable storage medium such as a CD or DVD

From the foregoing, it will be appreciated that example methods, apparatus, systems, and articles of manufacture have been disclosed that remove discretionary selections of data structure utilization from code development efforts. Examples disclosed herein permit pseudo code to be written by one or more users rather than syntax-accurate source code for memory operations, thereby facilitating improved source code operating characteristics by code developers that do not necessarily possess expertise in data structure implementation. The disclosed methods, apparatus, systems and articles of manufacture improve the efficiency of using a computing device by generating end-user code that has been optimized to improve one or more performance characteristics. Stated differently, absent examples disclosed herein, code developers may generate end-user code that exhibits wasteful utilization of platform resources due to, for instance, heuristic guesswork regarding particular types of data structures used in the code. The disclosed methods, apparatus and articles of manufacture are accordingly directed to one or more improvement(s) in the functioning of a computer.

Example methods, apparatus, systems, and articles of manufacture to select code data structure types are disclosed herein. Further examples and combinations thereof include the following:
Example 1 includes an apparatus to select a data structure type, the apparatus comprising an application programming interface (API) engine to generate an abstract data structure (ADS) placeholder in a location of a code sample corresponding to a memory operation, a data structure selector to select a first candidate data structure having a first candidate data structure type, the first candidate data structure to service the memory operation of the ADS placeholder, a workload engine to select a first candidate workload type to be processed by the selected first candidate data structure, an execution logger to log first code performance metrics during execution of the code sample during a first iteration corresponding to the first candidate data structure type and the first candidate workload type, and log second code performance metrics during execution of the code sample during a second duration corresponding to a second candidate data structure type and the first candidate workload type, and a classification engine to select one of the first candidate data structure type or the second candidate data structure type based on a relative ranking of the first and second code performance metrics.
Example 2 includes the apparatus as defined in example 1, further including a data sequence generator to generate a first sequence of operational data corresponding to the first candidate data structure type, and generate a second sequence of operational data corresponding to the second candidate data structure type.
Example 3 includes the apparatus as defined in example 2, further including a sequence normalizer to generate a fixed length representation of respective ones of the first sequence of operational data and the second sequence of operational data.
Example 4 includes the apparatus as defined in example 3, wherein the sequence normalizer is to invoke a long short-term memory (LSTM) neural network.
Example 5 includes the apparatus as defined in example 1, wherein the workload engine is to select a second candidate workload type for respective ones of the first candidate data structure type and the second candidate data structure type.
Example 6 includes the apparatus as defined in example 5, wherein the workload engine is to select different data quantity volumes for respective ones of the first and second candidate workload types.
Example 7 includes the apparatus as defined in example 1, further including a code entry detector to identify the memory operation in the code sample.
Example 8 includes a non-transitory computer readable storage medium comprising computer readable instructions that, when executed, cause at least one processor to at least generate an abstract data structure (ADS) placeholder in a location of a code sample corresponding to a memory operation, select a first candidate data structure having a first candidate data structure type, the first candidate data structure to service the memory operations of the ADS placeholder, select a first candidate workload type to be processed by the selected first candidate data structure, log first code performance metrics during execution of the code sample during a first iteration corresponding to the first candidate data structure type and the first candidate workload type, log second code performance metrics during execution of the code sample during a second duration corresponding to a second candidate data structure type and the first candidate workload type, and select one of the first candidate data structure type or the second candidate data structure type based on a relative ranking of the first and second code performance metrics.
Example 9 includes the non-transitory computer readable storage medium as defined in example 8, wherein the instructions, when executed, cause the at least one processor to generate a first sequence of operational data corresponding to the first candidate data structure type, and generate a second sequence of operational data corresponding to the second candidate data structure type.
Example 10 includes the non-transitory computer readable storage medium as defined in example 9, wherein the instructions, when executed, cause the at least one processor to generate a fixed length representation of respective ones of the first sequence of operational data and the second sequence of operational data.
Example 11 includes the non-transitory computer readable storage medium as defined in example 10, wherein the instructions, when executed, cause the at least one processor to invoke a long short-term memory (LSTM) neural network.
Example 12 includes the non-transitory computer readable storage medium as defined in example 8, wherein the instructions, when executed, cause the at least one processor to select a second candidate workload type for respective ones of the first candidate data structure type and the second candidate data structure type.
Example 13 includes the non-transitory computer readable storage medium as defined in example 12, wherein the instructions, when executed, cause the at least one processor to select different data quantity volumes for respective ones of the first and second candidate workload types.
Example 14 includes the non-transitory computer readable storage medium as defined in example 8, wherein the instructions, when executed, cause the at least one processor to identify the memory operation in the code sample.
Example 15 includes a computer-implemented method to select a data structure type, the method comprising generating, by executing an instruction with at least one processor, an abstract data structure (ADS) placeholder in a location of a code sample corresponding to a memory operation, selecting, by executing an instruction with the at least one processor, a first candidate data structure having a first candidate data structure type, the first candidate data structure to service the memory operations of the ADS placeholder, selecting, by executing an instruction with the at least one processor, a first candidate workload type to be processed by the selected first candidate data structure, logging, by executing an instruction with the at least one processor, first code performance metrics during execution of the code sample during a first iteration corresponding to the first candidate data structure type and the first candidate workload type, logging, by executing an instruction with the at least one processor, second code performance metrics during execution of the code sample during a second duration corresponding to a second candidate data structure type and the first candidate workload type, and selecting, by executing an instruction with the at least one processor, one of the first candidate data structure type or the second candidate data structure type based on a relative ranking of the first and second code performance metrics.
Example 16 includes the method as defined in example 15, further including generating a first sequence of operational data corresponding to the first candidate data structure type, and generating a second sequence of operational data corresponding to the second candidate data structure type.
Example 17 includes the method as defined in example 16, further including generating a fixed length representation of respective ones of the first sequence of operational data and the second sequence of operational data.
Example 18 includes the method as defined in example 17, further including invoking a long short-term memory (LSTM) neural network.
Example 19 includes the method as defined in example 15, further including selecting a second candidate workload type for respective ones of the first candidate data structure type and the second candidate data structure type.
Example 20 includes the method as defined in example 19, further including selecting different data quantity volumes for respective ones of the first and second candidate workload types.
Example 21 includes the method as defined in example 15, further including identifying the memory operation in the code sample.

Although certain example methods, apparatus and articles of manufacture have been disclosed herein, the scope of coverage of this patent is not limited thereto. On the contrary, this patent covers all methods, apparatus and articles of manufacture fairly falling within the scope of the claims of this patent.

The following claims are hereby incorporated into this Detailed Description by this reference, with each claim standing on its own as a separate embodiment of the present disclosure.

## Claims

1. An apparatus to select a data structure type, the apparatus comprising:
an application programming interface (API) engine to generate an abstract data structure (ADS) placeholder in a location of a code sample corresponding to a memory operation;
a data structure selector to select a first candidate data structure having a first candidate data structure type, the first candidate data structure to service the memory operation of the ADS placeholder;
a workload engine to select a first candidate workload type to be processed by the selected first candidate data structure;
an execution logger to:
log first code performance metrics during execution of the code sample during a first iteration corresponding to the first candidate data structure type and the first candidate workload type; and
log second code performance metrics during execution of the code sample during a second duration corresponding to a second candidate data structure type and the first candidate workload type; and
a classification engine to select one of the first candidate data structure type or the second candidate data structure type based on a relative ranking of the first and second code performance metrics.

2. The apparatus as defined in claim 1, further including a data sequence generator to:
generate a first sequence of operational data corresponding to the first candidate data structure type; and
generate a second sequence of operational data corresponding to the second candidate data structure type.

3. The apparatus as defined in claim 2, further including a sequence normalizer to generate a fixed length representation of respective ones of the first sequence of operational data and the second sequence of operational data.

4. The apparatus as defined in claim 3, wherein the sequence normalizer is to invoke a long short-term memory (LSTM) neural network.

5. The apparatus as defined in claim 1, wherein the workload engine is to select a second candidate workload type for respective ones of the first candidate data structure type and the second candidate data structure type.

6. The apparatus as defined in claim 5, wherein the workload engine is to select different data quantity volumes for respective ones of the first and second candidate workload types.

7. The apparatus as defined in claim 1, further including a code entry detector to identify the memory operation in the code sample.

8. A computer-implemented method to select a data structure type, the method comprising:
generating, by executing an instruction with at least one processor, an abstract data structure (ADS) placeholder in a location of a code sample corresponding to a memory operation;
selecting, by executing an instruction with the at least one processor, a first candidate data structure having a first candidate data structure type, the first candidate data structure to service the memory operations of the ADS placeholder;
selecting, by executing an instruction with the at least one processor, a first candidate workload type to be processed by the selected first candidate data structure;
logging, by executing an instruction with the at least one processor, first code performance metrics during execution of the code sample during a first iteration corresponding to the first candidate data structure type and the first candidate workload type;
logging, by executing an instruction with the at least one processor, second code performance metrics during execution of the code sample during a second duration corresponding to a second candidate data structure type and the first candidate workload type; and
selecting, by executing an instruction with the at least one processor, one of the first candidate data structure type or the second candidate data structure type based on a relative ranking of the first and second code performance metrics.

9. The method as defined in claim 8, further including:
generating a first sequence of operational data corresponding to the first candidate data structure type; and
generating a second sequence of operational data corresponding to the second candidate data structure type.

10. The method as defined in claim 9, further including generating a fixed length representation of respective ones of the first sequence of operational data and the second sequence of operational data.

11. The method as defined in claim 10, further including invoking a long short-term memory (LSTM) neural network.

12. The method as defined in claim 8, further including selecting a second candidate workload type for respective ones of the first candidate data structure type and the second candidate data structure type.

13. The method as defined in claim 12, further including selecting different data quantity volumes for respective ones of the first and second candidate workload types.

14. The method as defined in claim 8, further including identifying the memory operation in the code sample.

15. A non-transitory computer readable storage medium comprising computer readable instructions that, when executed, cause at least one processor to perform the method of any of claims 8-14.
